(19) Europäisches Patentamt
European Patent Office
Office européen des brevets

(11) **EP 2 012 117 A1**

(12) **EUROPEAN PATENT APPLICATION**

(43) Date of publication:
**07.01.2009 Bulletin 2009/02**

(51) Int Cl.:
***G01N 29/024*** (2006.01)  ***G01N 29/036*** (2006.01)
***G01N 29/34*** (2006.01)  ***G01N 29/44*** (2006.01)
***G01N 9/00*** (2006.01)

(21) Application number: **07013324.4**

(22) Date of filing: **06.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **TF Instruments, Inc.**
**Monmouth Junction NJ 08852 (US)**

(72) Inventor: **The designation of the inventor has not yet been filed**

(74) Representative: **Hertz, Oliver**
**v. Bezold & Partner**
**Patentanwälte**
**Akademiestrasse 7**
**80799 München (DE)**

(54)   **Method and device for acoustically measuring an adiabatic compressibility of a fluid**

(57)   A method for determining an adiabatic compressibility of a fluid in a resonator chamber device (1) comprises the steps of acoustically exciting a sequence of fluid resonances of the fluid in the resonator chamber device (1), measuring of resonance frequency values derived from the fluid resonances, matching a simulation function ($y_k$) to the resonance frequency values, the simulation function ($y_k$) including a mass density of the fluid and an ultrasound velocity in the fluid as variables, and determining the mass density of the fluid on the basis of the mass density and the ultrasound velocity of the matched simulation function ($y_k$), wherein the matching step includes varying the mass density of the fluid included in the simulation function ($y_k$) until the simulation function ($y_k$) matches the measured resonance frequency values, and the adiabatic compressibility of the fluid is determined based on the mass density and the ultrasound velocity. Furthermore, a compressibility measurement device is described.

EP 2 012 117 A1

preparing step                    **10**
  - providing sample
  - purification

measuring step                    **20**
  - concentration variation
  - temperature variation

evaluating step                   **30**
  - determining mass density and/or
    compressibility
  - output of results

**FIG. 1**

**Description**

Field of the invention

The invention is related to a method and a device for measuring an adiabatic compressibility of a fluid.

Technical Background

In various technical fields, e.g. in thermodynamics, fluid mechanic, medicine, biochemistry and biology, there is an interest in measuring the compressibility of fluid samples. The compressibility is a thermodynamic property closely related to mass density and volume. With the compressibility, a change of the sample volume in response to a pressure or stress change is described. With a constant temperature during the pressure change, the compressibility is called isothermal compressibility. If an energy exchange is excluded during compression and expansion, the compressibility is called adiabatic compressibility. As the experimental approach to measure the adiabatic compressibility, i.e. the compressibility during fast compressions, is difficult, in most cases the adiabatic compressibility is determined indirectly.
The adiabatic compressibility is closely related to the density p and the sound velocity c at ultrasonic frequencies in the sample. According to the Newton-Laplace-equation, the adiabatic compressibility $\beta$ is related to the density p and the ultrasonic velocity c as follows:

$$\beta = \frac{1}{c^2 \rho} \qquad (1)$$

Therefore, most data of adiabatic compressibility in tables of thermodynamic properties have been determined using a combination of measurements of the ultrasonic velocity and density. This approach is by far more precise and more convenient than any attempt to the adiabatic compressibility directly.
The combined measurement of density and ultrasonic velocity enabling the calculation of the adiabatic compressibility is realized so far in a commercial instrument including an oscillating tube (Density and Sound Measurement Device DSA 5000, Anton Paar GmbH, Austria). This device requires relatively large sample volumes (3 ml) and reaches only low resolution and accuracy in the measurements of the ultrasonic velocity. As a consequence, this instrument permits determination of the adiabatic compressibility according to equation (1) only with limited accuracy, inspite the fact that the ultrasonic measurements in this instrument reach an accuracy of 0.000 005 $g/cm^3$ and a resolution of 0.000 001 $g/cm^3$.
As a matter of fact, for determining the density and ultrasonic velocity independent isolated measuring methods are available at present with corresponding accuracies. However, as the density and the ultrasonic velocity are extremely dependent on temperature, the combination of both values in equation (1) will not lead to the adiabatic compressibility on the same level of accuracy, if the measurements are not carried out at precisely the same temperature. This would be possible only with an extreme experimental effort.
As convenient methods for measuring density and ultrasonic velocity the following further methods are known. For density measurements, US 3 523 446 discloses a device for density determination, which includes a mechanical oscillator. The mechanical oscillator is arranged in the sample to be investigated. After an excitation of a flexural vibration of the mechanical oscillator in the sample, the mass density can be derived from oscillation parameters of the mechanical oscillator. As an advantage, the mass density can be obtained with a relative precision of about $10^{-6}$. However, the conventional measurement with a mechanical oscillator requires a sample volume of about 1 ml to 2 ml. With a plurality of applications, e.g. in the fields of medicine, biochemistry and biology, such large sample volumes are not available. As an example, a practical sample of a protein solution as available for biological investigations has a volume below 500 $\mu$l. As another disadvantage, the flexural vibration measurement cannot be applied with inhomogeneous samples, like e.g. suspensions or highly concentrated solutions having a tendency to form aggregates. Due to the effect of the mechanical oscillator, a demixing or decomposition can occur, which deteriorates the precision of mass density determination.
A further disadvantage of the conventional oscillator technique is the limited mechanical stability of the oscillator. The mechanical oscillator is subjected to aging effects, which requires current calibration of the device in order to achieve full precision.
For measurements of the ultrasonic velocity, US 2005/0043906 A1 discloses a method for determining acoustic parameters of a liquid sample in a resonator cavity. The ultrasonic velocity is determined by evaluating the response of the resonator cavity at a sequence of frequencies of the liquid resonances on the basis of a theoretical function (simulation function) including among other terms the sound velocity and the density of the liquid sample as parameters.

Although the sound velocity can be determined with this method with high precision, the mass density values can be calculated on the basis of the ultrasonic measurement with insufficient precision only. The mass density can be obtained with a relative precision of $10^{-3}$ only, which is inferior compared with the precision of vibrating oscillator measurements. However, precise values of compressibility in concentrated or diluted solutions are of increasing interest for the discussion of solute properties, such as e.g. proteins, nucleotides, pharmaceutical substances or nano-particles. Investigating solute properties on a molecular level requires a relative precision of compressibility values in the range of $10^{-5}$ or better ($\leq 10^{-6}$).

In summary, using the combination of the methods described above the adiabatic compressibility can be determined only in large volume samples with limited accuracy and with the risk of deteriorating the sample. The conventional application of the simulation function in ultrasonic resonators leads only to insufficient values of the adiabatic compressibility because of the poor precision of the evaluated mass density values.

Summary of the invention

It is the objective of the invention to provide an improved method, which avoids the disadvantages of the conventional techniques and which in particular allows a determination of the adiabatic compressibility with improved precision and reproducibility even with small sample volumes.

This objective is achieved by methods and devices with the features defined in the independent claims. Advantageous embodiments and applications of the invention are characterized in the dependent claims.

According to a first general aspect, the invention is based on a determination of the mass density of a fluid in a resonator cavity with a procedure comprising the steps of acoustically exciting a sequence of acoustical fluid resonances, measuring the resonance frequencies and matching (adapting) a simulation function to the resonance frequencies, wherein the simulation function includes the mass density and the ultrasonic velocity as parameters. Contrary to the approach of US 2005/ 0043906 A1, which yields as a parameter the precise ultrasonic velocity and the parameter of the mass density with reduced precision, in the inventive matching process except of the mass density, values for the remaining parameters are used from other, e.g. previous evaluations. In the inventive matching process, the adaptation of the simulation function includes a variation of the parameter mass density. As a surprising result, the inventor has found an essentially improved precision of the mass density value. It is emphasized that with this first aspect the scope of the invention generally includes the determination of the mass density by the matching of the simulation function.

According to a second aspect of the invention, a method of determining the adiabatic compressibility of the fluid is proposed, wherein the adiabatic compressibility is obtained with the mass density determined according to the above first aspect of the invention.

As an essential advantage of the invention, both the mass density and the ultrasonic velocity are determined simultaneously, i.e. from one single acoustical measurement providing both values. As a result, the adiabatic compressibility of the fluid can be determined with the improved precision even with small sample volumes in the sub-ml-range, e.g. with a volume of 500 $\mu$m or even smaller, like e.g. in the range of 100 $\mu$l to 300 $\mu$l.

According to an advantageous embodiment of the invention, the ultrasonic velocity in the fluid can be kept constant during the matching step, i.e. during varying the mass density. As an example, the ultrasonic velocity is set on a fixed value obtained from predetermined reference data. In this case, advantages in terms of reduced complexity for implementing a matching algorithm can be obtained. Preferably, both the mass density and the ultrasonic velocity are varied for matching the simulation function to the measured resonance frequency values, advantageously resulting in an increased precision of the matching result. As variants of the invention, both the mass density and the ultrasonic velocity can be varied simultaneously during the matching step. In terms of reducing the algorithm complexity both values are not varied simultaneously, but subsequently. With this preferred variant of the invention, the mass density of the fluid is kept constant during varying the ultrasonic velocity.

Using the simulation function, which describes the deviation of the resonance frequencies observed for the coupled oscillations from the resonance frequencies of an ideal resonator are analyzed as described in US 2005/0043906 A1. The desired mass density of the fluid sample results from the simulation function as described below. Besides the acoustic properties of the sample liquid, known or empirically determined properties of the coupled solid resonator components are included in the simulation function. The simulation function can thus be formulated in relation to the concrete application, e.g., on the basis of an analysis of the resonator behaviour or empirically.

According to a further preferred embodiment of the invention, the simulation function is selected for evaluating acoustic measurements with resonator structures as described in US 2005/0043906 A1. Thus, with those or other resonator structures the simulation function ($y_k$) is preferably represented by

$$y_k = \frac{c_L}{2D}\left\{ k + \frac{2}{\pi} arctan \frac{\rho \cdot c_L}{z_R \, tan\left\{ \pi \frac{f_k}{f_R} \right\}} \right\} \quad \text{for } f_k < f_R$$

and

$$y_k = \frac{c_L}{2D}\left\{ k - 2 + \frac{2}{\pi} arctan \frac{\rho \cdot c_L}{z_R \, tan\left\{ \pi \frac{f_k}{f_R} \right\}} \right\} \quad \text{for } f_k > f_R \quad ,$$

with, in these equations:

D    layer thickness of the fluid,
k    harmonic order
$f_k$    observed resonance frequency
$f_R$    coupled resonance frequency of the reflecting wall structure
$C_L$    speed of sound in the fluid
p    mass density of the fluid
$Z_R$    acoustic impedance of the reflecting wall
$Y_k$    calculated deviation.

In the above functions, the acoustic impedance $z_L$ of the fluid is included with $z_L = \rho \, cL$.

Preferably, the sequence of ultrasonic fluid resonances in the vicinity of the fundamental transducer frequency on the side of lower frequencies and/or on the side of higher frequencies builds a series of consecutive frequencies which enables the precise matching of the simulation function.

According to a further advantageous variant of the invention, the steps of acoustically exciting the sequence of fluid resonances, measuring the resonance frequency values, and matching the simulation function are performed multiple times and averaged values of the matched mass density and the ultrasonic velocity are calculated.

The inventor has found that the precision of mass density and/or compressibility determination can be even improved if the fluid in the resonator chamber can be excited with high resonance sharpness. The inventor has found that the sharpness depends on the damping of ultrasound in the fluid and in the material of the resonator transducers included in the resonator chamber.

According to a particularly preferred embodiment, the mass density and/or compressibility determination is conducted with a resonator cavity, which filled with water of 25 °C exhibits liquid resonances with quality factors of at least 2500, e. g. 3000 or higher. For density evaluations the most significant liquid resonances are the resonances strongly coupled with the fundamental resonances of the transducers, which are measured in close vicinity of the fundamental of the transducers. Therefore, the sharpness and homogeneity (quality) of these resonances is important for the precision with which the evaluation of the mass density parameter can be carried out. The comparison of the quality factors of transducers of the same geometry but from different material is a measure for the accuracy, which can be reached in the analysis of fluid resonances. As an example, the quality factor of Langasit is about 10 times higher than the quality factor of Lithium niobate. This shows that the analysis of the fluid resonances for a detection of the mass density parameter using Langasit transducers is at least more accurate by an order of magnitude.

Hence, according to a particularly preferred embodiment of the invention, the measurement of fluid resonances is implemented with a resonator chamber containing transducers made of Langasit. The inventor has found that the quartz-like lattice structure and extreme hardness of Langasit yield excellent oscillation properties allowing a mass density determination with a relative precision of at least $10^{-6}$. The use of Langasit as a transducer material in a resonator chamber arranged for measuring fluid resonances, in particular for determining the mass density and/or compressibility of the fluid in the resonator chamber represents an independent suspect of the present invention.

As a further advantage, the invention can be implemented with a broad range of samples, which generally consist of or include a fluid (in the following: fluid samples). In particular, the fluid sample may comprise a solution or a suspension including molecules, macromolecules or even suspended particles.

Particular advantages are obtained, when the method of the invention is implemented with a fluid sample comprising a solution of a substance being capable of forming aggregates. With such a sample, the conventional instrument including the oscillating tube has a risk of demixing the oscillating sample. On the contrary, the invention allows a precise measurement of the aggregate forming solution even with an increased concentration.

According to particularly preferred embodiment, a sample comprises an aqueous solution of proteins and/or lipids. In this case, the compressibility provides a quantitative measure of the hydratisation of the molecules in the solution. Advantageously, the protein and/or lipid solution can be characterized for pharmaceutical applications.

Further advantages of the invention are obtained if the compressibility of the fluid is determined with a plurality of different concentrations of sample substance and/or temperatures. With the concentration and/or temperature dependency, an extended characterization of samples, in particular biological samples with proteins and/or lipids can be obtained.

In particular with the above first aspect of the invention, the following features are preferably implemented. If a calibration data set representing a concentration dependency of the mass density of a sample substance to be investigated is provided, advantages result for analysing an unknown sample including the sample substance. As an example, the unknown sample (test sample) to be investigated is provided with a predetermined concentration of the sample substance. With a determination of the mass density of the test sample and a comparison with the calibration data set, an aggregation condition of the test sample can be determined. In an analogue way, the aggregation condition of the test sample can be determined by providing an plurality of test samples with different concentrations of the sample substance and comparing the mass density in each of the test samples with the calibration data set.

According to a third aspect of the invention, a compressibility measurement device for implementing the method of the invention is provided. In particular, the compressibility measurement device comprises a resonator chamber permitting the excitation of acoustical fluid resonances and the measurement of the resonance frequencies of the resonances in the fluid sample. Furthermore, the compressibility measurement device comprises an evaluating device for determining the mass density and/or compressibility of the fluid.

The resonator chamber device preferably comprises a sound resonator cell with transducers and a sound frequency detection circuit. It is preferably equipped with devices enabling variation and control of temperature. Using such a device, the relevant mechanical or thermodynamic properties outlined above can be measured. Preferably, the evaluating device comprises a calculating circuit containing a matching and/or approximation circuit.

Further subjects of the invention are a computer program residing on a computer-readable medium, with a program code for carrying out the method according to the above first or second aspects of the invention, and an apparatus comprising a computer-readable storage medium containing program instructions for carrying out the method according to the above first or second aspects of the invention.

Brief description of the drawings

The invention will be described in the following for the purpose of exemplification with reference to the accompanying schematic drawings, which illustrate preferred embodiments and which show in:

Figure 1:    a schematic illustration of features of the method according to a preferred embodiment of the invention; and

Figure 2:    a schematic illustration of a device according to a preferred embodiment of the invention.

Preferred embodiments of the invention

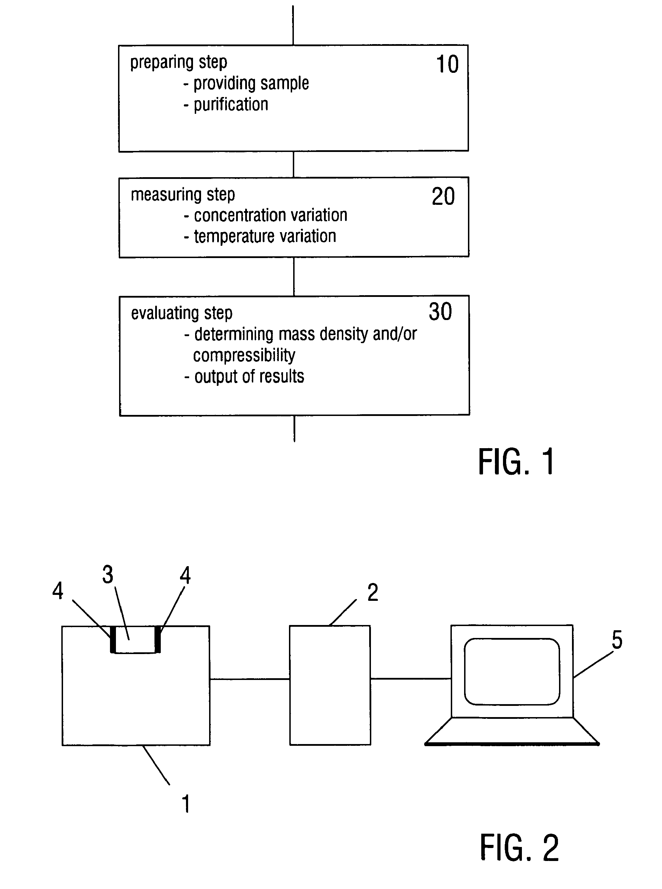

Embodiments of a method and a device according to the invention are illustrated in Figures 1 and 2. These embodiments can be implemented using the technique described in US 2005/0043906 A1, which is introduced into the present specification by reference. In particular, the details of the operation of the ultrasonic resonator and the acoustic excitation of the fluid sample, the evaluation of the resonance frequencies of the fluid sample, the theoretical explanation and formulation of the simulation function and the structure of the measurement device are introduced into the present specification by reference. Specifically, the following description of further preferred embodiments illustrates the amendments of the conventional technique as disclosed with the present invention.

According to Figure 1, the method of the invention comprises a preparing step 10, a measuring step 20 and an evaluating step 30. The preparing step is an optional feature of the invention. Generally, the preparing step 10 may comprise a preparation of a fluid sample, in particular providing a fluid sample including a predetermined sample substance and arranging the fluid sample in a resonator chamber of a compressibility measurement device. As a further option, the preparing step 10 may include a purification of the fluid sample.

Preferred examples of the application of the inventive method on fluid samples comprises the determination of adiabatic compressibilities in electrolyte solutions, such as e. g. sodium chloride, copper sulphate, magnesium perchlorate, or in solutions of small molecules, such as e.g. glucose, sucrose, phospholipids, detergents. Special advantages of the compressibility measuring method have been experienced in measurements on protein solutions, microemulsions and nanoemulsions and dispersions of lipid aggregates.

The measuring and evaluating steps 20, 30 comprise the substeps of acoustic excitation of the fluid in the resonator chamber device in such a way that a sequence of fluid resonances is excited in a frequency range in which the wall material of the resonator chamber device and/or associated transducers have natural resonances with amplitudes different from zero, and measurement of the associated resonance frequencies of the liquid in the resonator chamber; determining an observed deviation of the measured resonance frequencies from ideal resonance frequencies in an ideal resonator corresponding to the resonator chamber; calculating a simulation function $y_k$ depending on the acoustic parameters of the fluid and representing calculated deviations of the resonance frequencies from the ideal resonance frequencies; adapting the calculated deviations to the observed deviations by a matching of the simulation function $y_k$, and deriving the mass density from the matched simulation function $y_k$.

As an example, the above simulation function $y_k$ is used for implementing the invention. Contrary to the conventional technique, the matching process of the simulation function $y_k$ comprises a variation of the mass density included in the simulation function $y_k$.

The measuring step 20 may comprise the ultrasonic measurements with the various solutions prepared with various sample substance concentrations. As an example, ultrasonic velocity is measured in solutions having varying concentrations for obtaining the concentration function of the mass density. Optionally, the temperature can be varied for measuring a temperature dependency of the mass density.

With the evaluating step 30, the mass density p and the ultrasonic velocity c are determined on the basis of the matched simulation function. Subsequently, the adiabatic compressibility β is calculated according $\beta = \dfrac{1}{c^2 \rho}$ .

As a specific example, conducting the inventive method with a fluid sample comprising a solution of 3.95 % (W/W) sucrose in water at 30.00 °C results in the following key parameters of the simulation function.

$$z_L = 1.53667 \cdot 10^6 \ [\text{kg/m}^2\text{s}],$$

and

$$c_L = 1520.18 \ [\text{m/s}].$$

Accordingly, the mass density is

$$\rho = z_L \ / \ c_L = 1010.85 \ [\text{kg/m}^3],$$

and the adiabatic compressibility is

$$\beta = 42.8078 \cdot 10^{-11} \ [\text{Pa}^{-1}]$$

According to Figure 2, a compressibility measurement device of the invention comprises a resonator chamber device 1 and an evaluating device 2. The resonator chamber device 1 includes a resonator cell 3 adapted to accommodate the fluid sample and to measure fluid resonances. As an example, the resonator chamber device 1 can be a ResoScan Research system (TF Instruments GmbH, Germany). The ResoScan Research system allows temperature variations during measurement of the fluid resonances. As an example, the ResoScan Research system is used for the measurements as proposed by the operational manual of this device in particular with regard to the cleaning of the resonator cell, control of process parameters and careful operation.

The resonator cell 3 included in the resonator chamber device 1 comprises two transducers 4. The transducers 4 preferably consist of Langasit or quartz. The resonator cell 3 has an inner volume selected in the range of 160 μl to

220 μl. The transducers 4 typically have an area of 80 mm$^2$.

The evaluating device 2 being adapted for evaluating the measured values and for determining the mass density preferably is implemented by a computer, which may be integrated in the control of the resonator chamber device 1. Additionally, a display and control device 5 may be provided for operating the whole system. All components shown in Fig. 2 may be integrated into one single device.

The features of the invention disclosed in the above description, the drawings and the claims can be of significance both individually as well as in combination for the realization of the invention it its various embodiments.

**Claims**

1. A method for determining an adiabatic compressibility of a fluid in a resonator chamber device (1), comprising the steps of:

   - acoustically exciting a sequence of fluid resonances of the fluid in the resonator chamber device (1) ,
   - measuring of resonance frequency values derived from the fluid resonances,
   - matching a simulation function ($y_k$) to the resonance frequency values, the simulation function ($y_k$) including a mass density of the fluid and an ultrasound velocity in the fluid as variables, and
   - determining the mass density of the fluid on the basis of the mass density and the ultrasound velocity of the matched simulation function ($y_k$)

   **characterized in that**

   - the matching step includes varying the mass density of the fluid included in the simulation function ($y_k$) until the simulation function ($y_k$) matches the measured resonance frequency values, and
   - the adiabatic compressibility of the fluid is determined based on the mass density and the ultrasound velocity.

2. The method according to Claim 1, wherein

   - the ultrasound velocity in the fluid is kept constant during varying the mass density.

3. The method according to Claim 1 or 2, comprising a further matching step including

   - varying the ultrasound velocity in the fluid included in the simulation function ($y_k$) until the simulation function ($y_k$) matches the measured resonance frequency values.

4. The method according to Claim 3, wherein

   - the mass density of the fluid is kept constant during varying the ultrasound velocity.

5. The method according to at least one of the foregoing claims, wherein

   - the simulation function ($y_k$) is formed by:

$$y_k = \frac{c_L}{2D}\left\{ k + \frac{2}{\pi} arctan \frac{\rho \cdot c_L}{z_R\, tan\left\{\pi \frac{f_k}{f_R}\right\}} \right\} \quad \text{for } f_k < f_R$$

   and

$$y_k = \frac{c_L}{2D}\left\{ k - 2 + \frac{2}{\pi} arctan \frac{\rho \cdot c_L}{z_R \, tan\left\{ \pi \frac{f_k}{f_R} \right\}} \right\} \quad \text{for } f_k > f_R \quad ,$$

with, in these equations:

D layer thickness of the fluid
k harmonic order
$f_k$ observed resonance frequency
$f_R$ coupled resonance frequency of the reflecting wall structure
$C_L$ speed of sound in the fluid
p mass density of the fluid
$z_R$ acoustic impedance of the reflecting wall
$y_k$ calculated deviation.

**6.** The method according to at least one of the foregoing claims,
wherein the sequence of fluid resonances is formed by multiple sequential resonance frequencies of the fluid which lie in a neighbourhood below a predetermined natural frequency of the resonator chamber device (1).

**7.** The method according to one of the foregoing claims, wherein the steps of acoustically exciting the sequence of fluid resonances, measuring the resonance frequency values, and matching the simulation function ($y_k$) are performed multiple times and averaged values of the matched density and the ultrasound velocity are calculated.

**8.** The method according to one of the foregoing claims, wherein the fluid resonances of the fluid are excited using transducers in the resonator chamber (2) which transducers have a finesse Q of at least 2500.

**9.** The method according to one of the foregoing claims, wherein the fluid resonances of the fluid are excited using transducers (4) in the resonator chamber device (1) which transducers (4) being made of Langasit.

**10.** The method according to one of the foregoing claims, wherein the fluid comprises a solution of a substance being capable of forming aggregates.

**11.** The method according to one of the foregoing claims, wherein the fluid comprises an aqueous solution of proteins and/or lipids.

**12.** The method according to one of the foregoing claims, comprising the further steps of

- providing a plurality of samples comprising the fluid including different concentrations of a sample substance, and
- determining the compressibility of the fluid with each of the concentrations of the sample substance.

**13.** Compressibility measurement device, in particular being adapted for implementing the method according to one of the foregoing claims, comprising

- a resonator chamber device (1) being arranged for acoustically exciting sequence of fluid resonances in the fluid and measuring the resonance frequency values of the fluid resonances, and
- an evaluating device (2) for determining the mass density and/or compressibility of the fluid.

**14.** Computer program residing on a computer-readable medium, with a program code for carrying out the method according to at least one of the foregoing claims.

**15.** Apparatus comprising a computer-readable storage medium containing program instructions for carrying out the method according to at least one of the claims 1 to 12.

| preparing step | 10 |
| --- | --- |
|     - providing sample<br>    - purification | |

| measuring step | 20 |
| --- | --- |
|     - concentration variation<br>    - temperature variation | |

| evaluating step | 30 |
| --- | --- |
|     - determining mass density and/or<br>      compressibility<br>    - output of results | |

FIG. 1

FIG. 2

**European Patent Office**

## EUROPEAN SEARCH REPORT

Application Number

EP 07 01 3324

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 1 109 016 A (HALLIBURTON ENERGY SERV INC [US]) 20 June 2001 (2001-06-20)<br>* abstract; figures 1,12-17 *<br>* paragraphs [0053] - [0094] *<br>----- | 1<br><br>1-7 | INV.<br>G01N29/024<br>G01N29/036<br>G01N29/34<br>G01N29/44 |
| D,Y | DE 101 37 679 C1 (RESONIC INSTR AG [DE]) 19 December 2002 (2002-12-19)<br>* abstract; figures 1-5 *<br>* paragraphs [0024] - [0056] *<br>----- | 1-7 | G01N9/00 |
| Y | EGBERT B FREVER ET AL: "Sonic Studies of the Physical properties of Liquids. I. The sonic Interferometer, the Velocity of Sound in some Organic Liquids and their Compressibilities"<br>JOURNAL OF THE AMERICAN CHEMICAL SOCIETY, AMERICAN CHEMICAL SOCIETY, WASHINGTON, DC, US,<br>vol. 51, no. 3, March 1929 (1929-03), pages 759-770, XP009093305<br>ISSN: 0002-7863<br>* abstract *<br>* page 767, footnote 7 *<br>----- | 1-7 | |
| A | FRIEDER EGGERS ET AL: "Model calculations for ultrasonic plate - liquid - plate resonators: peak frequency shift by liquid density and velocity variations"<br>MEASUREMENT SCIENCE AND TECHNOLOGY, INSTITUTE OF PHYSICS PUBLISHING, BRISTOL, GB,<br>vol. 8, no. 6, 1 June 1997 (1997-06-01), pages 643-647, XP020064264<br>ISSN: 0957-0233<br>* abstract *<br>* page 644, left-hand column, paragraph 2 - page 647, left-hand column, paragraph 1 *<br><br>-----<br><br>-/-- | 1-7 | TECHNICAL FIELDS SEARCHED (IPC)<br><br>G01N |

The present search report has been drawn up for all claims

| Place of search | Date of completion of the search | Examiner |
|---|---|---|
| Munich | 7 December 2007 | Uttenthaler, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 01 3324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 102 35 907 A1 (DOS RENE [DE]) 26 February 2004 (2004-02-26) * abstract * * paragraphs [0011] - [0039] * ----- | 1-7 | |

TECHNICAL FIELDS SEARCHED (IPC)

The present search report has been drawn up for all claims

| Place of search | Date of completion of the search | Examiner |
|---|---|---|
| Munich | 7 December 2007 | Uttenthaler, Erich |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 2 012 117 A1**

ANNEX TO THE EUROPEAN SEARCH REPORT
ON EUROPEAN PATENT APPLICATION NO.

EP 07 01 3324

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2007

| Patent document cited in search report | | Publication date | Patent family member(s) | | Publication date |
|---|---|---|---|---|---|
| EP 1109016 | A | 20-06-2001 | CA | 2328635 A1 | 16-06-2001 |
| | | | NO | 20006419 A | 18-06-2001 |
| | | | US | 6412354 B1 | 02-07-2002 |
| DE 10137679 | C1 | 19-12-2002 | WO | 03014723 A1 | 20-02-2003 |
| | | | EP | 1419380 A1 | 19-05-2004 |
| | | | US | 2005043906 A1 | 24-02-2005 |
| DE 10235907 | A1 | 26-02-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3523446 A

- US 20050043906 A1